# NEUE EUROPÄISCHE PATENTSCHRIFT

(11) **EP 3 046 925 B2**
(45) Veröffentlichungstag und Bekanntmachung des Hinweises auf die Entscheidung über den Einspruch: **16.10.2024**
(45) Hinweis auf die Patenterteilung: 31.05.2017
(21) Anmeldenummer: 14771839.9
(22) Anmeldetag: 17.09.2014
(51) Int. Cl.: C07F 7/18

(54) **VERFAHREN ZUR HERSTELLUNG VON CARBAMATOORGANOSILANEN**
METHOD FOR PRODUCING CARBAMATOORGANOSILANES
PROCÉDÉ DE PRÉPARATION DE CARBAMATOORGANOSILANES

(30) Priorität: 20.09.2013 DE 102013218972
(43) Veröffentlichungstag der Anmeldung: 27.07.2016
(73) Patentinhaber: Wacker Chemie AG, 81671 München (DE)
(72) Erfinder: STANJEK, Volker, 84539 Ampfing (DE)
(74) Vertreter: Mieskes, Klaus Theoderich
(86) Internationale Anmeldenummer: PCT/EP2014/069818
(87) Internationale Veröffentlichungsnummer: WO 2015/040070

(56) Entgegenhaltungen:
- WO-A1-01/00634
- US-A- 5 218 133
- US-A- 5 220 047
- US-B1- 6 673 954

## Beschreibung

Die Erfindung betrifft ein Verfahren zur Herstellung von Carbamatoorganosilanen aus entsprechenden Aminoorganosilanen, und Dialkylcarbonat.

Aus dem Stand der Technik sind verschiedene Verfahren zur Herstellung von 3-Carbamatopropylsilanen der Formel (1) bekannt.

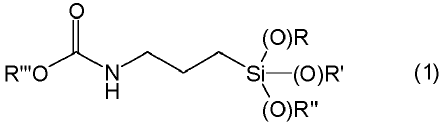

Gängige Herstellverfahren gehen meist von 3-Aminopropylsilanen der Formel (2) aus, mit Dialkylcarbonaten unter Abspaltung eines Alkohols zum Produkt umgesetzt werden. Derartige Verfahren sind beispielsweise in EP 0 583 581, US 6,673,954 oder WO 2007/037817 beschrieben.

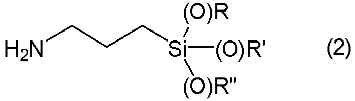

Allerdings besitzen die Verfahren, wie sie im Stand der Technik beschrieben sind, noch mehrere Nachteile. Zum einen werden vergleichsweise große Mengen (> 0,25%) eines basisches Metallalkoholates als Katalysator eingesetzt. Diese müssen vor der Aufarbeitung der Rohproduktmischung neutralisiert werden, wobei die dabei entstehenden Metallsalze einen zusätzlichen Filtrationsschritt erforderlich machen. Wünschenswert wäre daher, die Katalysatormenge auf ein Minimum zu reduzieren, idealerweise so weit, dass es im industriellen Prozess ausreichend ist, die fertig aufgearbeitete Produktmischung über eine einfache Filtereinheit im Reaktorauslas abzulassen. Derartige "Polizeifilter", die sehr kleine Mengen eventuelle Schwebstoffe aus einem Reaktionsprodukt entfernen, sind Stand der Technik und in den meisten industriellen Produktionsanlagen vorhanden.

Ein weiterer Nachteil der im Stand der Technik beschriebenen Verfahren zeigen sich entweder in moderaten Ausbeuten von 78-92% (US 6,673,954) oder relativ großen Mengen (ca. 2%) nicht umgesetzter Aminosilane (EP 0 583 581). Dabei stellen insbesondere nicht umgesetzte Aminosilane ein großes Problem dar, da sie einerseits nur schwer aus dem Produkt entfernbar sind, und andererseits bei der wichtigsten Anwendung der Carbamatosilane, dem Einsatz zur Synthese der entsprechenden Isocyanatosilane, mit letzteren reagieren, was zu Harnstoff-Biuret- oder sogar oligomeren bzw. polymeren Nebenprodukten führt.

Wünschenswert wäre daher ein Verfahren, das diese Nachteile nicht mehr aufweist.

Gegenstand der Erfindung ist ein Verfahren zur Herstellung von Carbamatoorganosilanen (CS) der allgemeinen Formel (3), 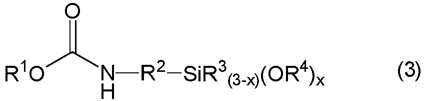 bei dem ein Aminoorganosilan (AS) der allgemeinen Formel (4), 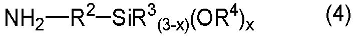 mit einem Dialkylcarbonat (DAC) der allgemeinen Formel (5), 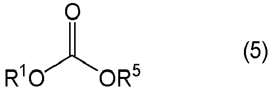 in Gegenwart eines basischen Katalysators (K) umgesetzt wird, wobei
- R¹, R³, R⁴ und R⁵: gleich oder verschieden sein können und jeweils einen einwertigen, unsubstituierten oder substituierten Kohlenwasserstoffrest darstellen,
- R²: einen zweiwertigen, unsubstituierten oder substituierten Kohlenwasserstoffrest darstellt, und
- x: einen Wert 1, 2 oder 3 bedeutet,
bei dem es während der Reaktion eine Periode (P1) gibt, in der die Reaktionstemperatur für die Dauer von mindestens 30 Minuten in einem Bereich von 45 bis 65 °C liegt, und es eine zeitlich später liegende Reaktionsperiode (P2) gibt, in der die Reaktionstemperatur zwischen 70 und 130 °C und mindestens 15 °C höher liegt als während der Periode (P1).

Der Erfindung liegt die vollkommen überraschende Entdeckung zugrunde, dass sich die Reaktionsgeschwindigkeit insbesondere bei den bevorzugten niedrigeren Katalysatorgehalten durch höhere Reaktionstemperaturen nur sehr bedingt steigern lässt. Im Gegenteil wurde gefunden, dass die Reaktion nahezu vollständig zum Erliegen kommt, wenn die Reaktionstemperatur für einen längeren Zeitraum bei zu hohen Temperaturen liegt.

Andererseits wurde gefunden, dass die Reaktion bei niedrigen Reaktionstemperaturen, insbesondere gegen Reaktionsende sehr langsam wird.

Diese überraschende Entdeckung führt zu dem Dilemma, das man entweder höhere Katalysatorkonzentrationen einsetzen muss, oder - bei höherer Reaktionstemperatur - nur einen unvollständigen Umsatz erreicht, oder - bei niedriger Reaktionstemperatur - sehr lange Reaktionszeiten benötigt. Keines dieser drei Alternativen ist wünschenswert.

Das erfindungsgemäße Verfahren löst dieses Dilemma, indem große Teile der Reaktion während einer ersten Periode in einem niedrigeren Temperaturbereich durchgeführt werden, an dem sich anschließend eine zweite Periode mit höherer Temperatur anschließt, in dem die Reaktion vervollständigt wird, noch bevor die Reaktion auf Grund der höheren Reaktionstemperatur zum Erliegen kommt.

Das erfindungsgemäße Verfahren zeichnet sich dadurch aus, dass bei Reaktionsende in der Reaktionsproduktmischung vorzugsweise ein Restgehalt an Aminoorganosilan (AS) von unter 1 Mol-%, besonders bevorzugt von unter 0,5 Mol-%, insbesondere unter 0,3 Mol-%, bezogen auf den Gesamtgehalt Aminoorganosilan (AS) und Carbamatoorganosilanen (CS) vorliegt.

Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor- isopropylrest und der Heptafluorisopropylrest, und Halogenarylreste, wie der o-, m- und p-Chlorphenylrest.

Bevorzugt handelt es sich bei dem Rest R¹ um einen unsubstituierten oder mit Halogenatomen substituierten, einwertigen Kohlenwasserstoffreste mit 1 bis 6 Kohlenstoffatomen, besonders bevorzugt um einen Alkylrest mit 1 oder 4 Kohlenstoffatomen, insbesondere um den Ethyl- oder Methylrest.

Beispiele für Reste R⁵ sind die für R¹ angegebenen Reste. Bevorzugt handelt es sich bei dem Rest R⁵ um einen unsubstituierten oder mit Halogenatomen substituierten einwertigen Kohlenwasserstoffrest mit 1 bis 6 Kohlenstoffatomen, besonders bevorzugt um einen Alkylrest mit 1 oder 4 Kohlenstoffatomen, insbesondere um den Ethyl- oder Methylrest.

Besonders bevorzugt sind R¹ und R⁵ identisch, wobei es sich besonders bevorzugt sowohl bei R¹ als auch bei R⁵ jeweils um Ethyl- oder aber jeweils um Methylreste handelt.

Beispiele für Reste R⁴ sind unabhängig voneinander die für R¹ angegebenen Reste.

Bevorzugt handelt es sich bei den Resten R⁴ um einen unsubstituierten oder mit Halogenatomen substituierten, einwertigen Kohlenwasserstoffrest mit 1 bis 6 Kohlenstoffatomen, besonders bevorzugt um einen Alkylrest mit 1 bis 4 Kohlenstoffatomen, insbesondere um den Ethyl- oder Methylrest.

Besonders bevorzugt sind sämtliche Reste R⁴, der R¹ und der Rest R⁵ identisch, wobei es sich besonders bevorzugt bei all diesen Resten entweder jeweils um Ethyl- oder aber jeweils um Methylreste handelt.

Beispiele für Reste R³ sind die für R¹ angegebenen Reste. Bevorzugt handelt es sich bei dem Rest R³ um einen unsubstituierten oder mit Halogenatomen substituierten, einwertigen Kohlenwasserstoffrest mit 1 bis 6 Kohlenstoffatomen, besonders bevorzugt um einen Alkylrest mit 1 oder 4 Kohlenstoffatomen, insbesondere um den Methylrest.

Beispiele für Reste R² sind zweiwertige Alkylenreste mit 1 bis 20 Kohlenstoffatomen, wie der Methylen-, Ethylen-, n-Propylen-, Butylen-, Pentylen-, Hexylen-, Heptylen-, Octylen, Nonylen oder der n-Decylenrest. Die genannten Reste können dabei auch über weitere Alkylsubstituenten wie z.B. über Methyl-, Ethyl- oder Propylsubstituenten verfügen. Auch Halogensubstituenten, z.B. Chlor- oder Bromsubstituenten sind möglich. Zudem kann es sich bei den Resten R² auch um zweiwertige cyclische Reste, z.B. Cyclopentylen-, Cyclohexylen- oder Phenylreste handeln. Auch diese können über die oben genannten Alkyl- oder Halogensubstituenten verfügen.

Bevorzugt handelt es sich bei den Resten R² um Alkylenreste mit ein bis 6 Kohlenstoffatomen, besonders bevorzugt um den Butylen, 2-Methylpropylen, Propylen- und den Methylenrest, insbesondere um den Propylen- und den Methylenrest.

Die Variable x hat vorzugsweise den Wert 2 oder 3.

Vorzugsweise liegt die Temperatur während der zeitlich früheren Reaktionsperiode (P1) bei mindestens 50 °C.

Vorzugsweise liegt die Temperatur während der zeitlich späteren Reaktionsperiode (P2) mindestens 20 °C, höher als bei der früheren Periode (P1). Der bevorzugte Temperaturbereich während der zweiten Periode (P2) liegt zwischen 70 und 100 °C.

Vorzugsweise werden die Komponenten Aminosilan (AS), Dialkylcarbonat (DAC) und Katalysator (K) vor oder während der ersten Reaktionsperiode (P1) vollständig zusammengeben. Vorzugsweise dauert die Periode (P1) auch nach der vollständigen Zugabe aller Komponenten noch mindestens zusätzliche 30 Minuten, besonders bevorzugt mindestens zusätzliche 45 Minuten, bevor die Reaktionsmischung erwärmt wird und die Periode (P2) beginnt.

Bevorzugte Beispiele für Carbamatosilane (CS) der allgemeinen Formel (3) sind *N*-(3-Trimethoxysilylpropyl)-*O*-methylcarbamat, *N*-(3-Triethoxysilylpropyl)-*O*-ethylcarbamat, *N*-(3-Methyldimethoxysilylpropyl)-*O*-methylcarbamat, *N*-(3-Methyldiethoxysilylpropyl)-*O*-ethylcarbamat, *N*-(Trimethoxysilylmethyl)-*O-*methylcarbamat, *N*-(Triethoxysilylmethyl)-*O*-ethylcarbamat, *N-*(Methyldimethoxysilylmethyl)-*O*-methylcarbamat und *N*-(Methyldiethoxysilylmethyl)-*O*-ethylcarbamat, insbesondere *N*-(3-Trimethoxysilylpropyl)-*O*-methylcarbamat, *N*-(3-Triethoxysilylpropyl)-*O*-ethylcarbamat, *N*-(Trimethoxysilylmethyl)-*O-*methylcarbamat, *N*-(Triethoxysilylmethyl)-*O*-ethylcarbamat und *N-*(Methyldimethoxysilylmethyl)-*O*-methylcarbamat.

Diese bevorzugte Carbamatosilane (CS) werden vorzugsweise aus Aminosilanen (AS) der allgemeinen Formel (4) und Dialkylcarbonaten (DAC) der allgemeinen Formel (5) hergestellt, die über genau dieselben Reste R¹ bis R⁴ sowie dieselbe Variable x verfügen, wie das erhaltene Carbamatosilan (CS). Der Rest R⁵ im Dialkylcarbonat (DAC) weist dabei vorzugsweise dieselbe Bedeutung auf wie der Rest R¹.

Vorzugsweise werden bei der erfindungsgemäßen Reaktion die Aminosilane (AS) und die Dialkylcarbonate (DAC) in einem Verhältnis von 1,0:0,9 bis 1,0:3,0, besonders bevorzugt in einem Verhältnis von 1,0:1,0 bis 1,0:2,0, insbesondere in einem Verhältnis von 1,0:1,0 bis 1,0:1,5 eingesetzt. Um einerseits einen möglichst vollständigen Umsatz der Aminosilankomponente (AS) zu erzielen, andererseits aber auch eine möglichst gute Raum-Zeit-Ausbeute erreichen, d.h. einen möglichst kleinen Überschuss an Dialkylcarbonat (DAC) einzusetzen, stellt ein Mengenverhältnis zwischen Aminosilan (AS) und Dialkylcarbonat (DAC) von 1:1,1 bis 1:1,4 ein besonders bevorzugtes Optimum dar.

Sowohl die entsprechenden Aminosilane (AS) als auch die Dialkylcarbonate (DAC) sind kommerziell in großen Mengen von zahlreichen verschiedenen Anbietern erhältlich.

Als Katalysator (K) werden vorzugsweise Metallalkoholate, insbesondere Alkali- oder Erdalkalialkoholate eingesetzt. Besonders bevorzugte Katalysatoren sind Natriummethanolat, Natriumethanolat, Kaliummethanolat, Kaliumethanolat, Calciummethanolat oder Caliumethanolat. In einer besonders bevorzugten Ausführung der Erfindung wird ein Alhoholat eingesetzt, dessen Alkylgruppe den Resten R⁴ in Formel (3) entspricht. Dies ist vor allem dann von Vorteil, wenn alle Reste R¹, R⁴ und R⁵ identisch sind.

Der Katalysator kann dabei in Substanz aber auch in Form einer Lösung, insbesondere in Form einer alkoholischen Lösung eingesetzt werden. Im Falle einer alkoholischen Lösung sind die Alkylgruppen des Alkohols und des Alkoholates vorzugsweise identisch. Geeignete Katalysatorlösungen mit typischerweise 10-33 %-iger Lösung des Metallalkoholates in dem entsprechenden Alkohol sind kommerziell verfügbar und werden ob ihrer leichten Dosierbarkeit besonders bevorzugt eingesetzt.

Vorzugsweise liegt der Gehalt des Katalysators (K) bei höchstens 0,2 Gew.-%, besonders bevorzugt bei höchstens 0,19 Gew.-%, insbesondere höchstens bei 0,15 Gew.-%, jeweils bezogen auf das Gewicht der gesamten Reaktionsmischung.

Vorzugsweise enthält die Reaktionsmischung außer den Komponenten Aminosilan (AS), Dialkylcarbonat (DAC) und Katalysator (K) weitere Stoffe wie z.B. Lösungsmittel in Mengen von höchstens 50 Gew.-%, besonders bevorzugt höchstens 30 Gew.-%, insbesondere höchstens 15 Gew.-%, jeweils bezogen auf die gesamte Reaktionsmischung. Bei einer besonders bevorzugten Verfahrensvariante enthält die Reaktionsmischung außer den Reaktanden und dem Katalysator (K) sowie dem gegebenenfalls vorhandenen Lösungsmittel, in dem der Katalysator (K) gelöst war, keinerlei weitere Komponenten, insbesondere keine weiteren Lösungsmittel.

Nach Ende der Reaktion wird die Reaktionsmischung vorzugsweise durch Zusatz einer Säure neutralisiert. Dabei kann es sich prinzipiell um jedwede Säure handeln. Beispiele sind organische Säuren, insbesondere Carbonsäuren, wie Ameisensäure, Essigsäure, Propionsäure, Buttersäure, Zitronensäure, Oxalsäure, Weinsäure, Benzoesäure, Ammoniumacetat Ammoniumformiat oder auch Alkylammoniumverbindungen wie Triethylammoniumchlorid, ebenso wie auch anorganische Säuren wie Salzsäure, Schwefelsäure, Phosphorsäure, partial veresterte Schwefel- oder Phosphorsäure, Toluolsulfonsäure, Salpetersäure oder auch um Ammoniumverbindungen wie Ammoniumsulfat, Amoniumchlorid. Vorzugsweise werden dabei wasserfreie Säuren eingesetzt.

Vorzugsweise wird die Säure in einer Menge zugegeben, dass auf ein Mol basischer Funktionen im Katalysator (K) 0,8 bis 10 Mol, besonders bevorzugt 0,9 bis 2 insbesondere 0,99 bis 1,5 Mol saure Funktionen kommen.

In einer bevorzugten Ausführung der Erfindung wird die Säure in einer Menge zugegeben, dass der pH-Wert der Reaktionsmischung je nach eingesetzter Säure vom stark Alkalischen gerade eben ins Saure, schwach Saure, Neutrale oder aber schwach Basische umschlägt. Der pH-Wert kann dabei beispielsweise durch eine pH Elektrode oder aber auch durch in Kontaktbringen von einer Probe der Reaktionsmischung mit einem angefeuchteten pH-Papier bestimmt werden.

Die Neutralisation kann dabei sowohl bei Raumtemperatur als auch bei erhöhten Temperaturen durchgeführt werden. Bei einem besonders bevorzugten Verfahren wird die Neutralisation direkt nach Reaktionsende durchgeführt, ohne dass die Reaktionsmischung nennenswert, d.h. um mehr als 10 °C, aufgewärmt oder abgekühlt wird. Dies hat im industriellen Prozess den Vorteil, dass keine zusätzlichen Zeiten für Aufwärm- und Abkühlvorgänge benötigt werden. Auch die nachfolgende destillative Entfernung der Leichtsieder (s.u.) kann direkt im Anschluss ohne nennenswerte Aufwärm- oder Abkühlschritte, d.h. Temperaturänderungen von mehr als 10 °C, begonnen werden.

Das vorzugsweise feste Neutralisationsprodukt aus dem Katalysator wird bevorzugt durch einen Filtrationsschritt entfernt. In einer besonders bevorzugten Ausführung der Erfindung ist die Menge des Katalysatorsalzes jedoch so gering, dass diese Filtration unproblematisch ist, z.B. indem sie nicht in Form eines gesonderten Filtrationsschrittes erfolgt, sondern die Reaktionsmischung lediglich über einen in die Rohrleitung eingebauten Filter aus dem Reaktionsgefäß abgelassen wird.

Der bei der Reaktion freigesetzte Alkohol sowie der gegebenenfalls eingesetzte Dialkylcarbonatüberschuss (DAC) werden vorzugsweise destillativ entfernt. Dies kann direkt im Anschluss an die Reaktion erfolgen, indem die zu entfernenden Leichtsieder direkt aus dem Reaktionsgemisch abdestilliert werden, aber auch in einen gesonderten Destillationsschritt, z.B. über einen Dünnschicht- oder Fallfilmverdampfer. Die Destillation kann dabei auch in Gegenwart des neutralisierten, aber noch nicht entfernten Katalysators (K) erfolgen.

Das erfindungsgemäße Verfahren kann dabei sowohl batchweise als auch kontinuierlich durchgeführt werden. Dies kann gilt sowohl für die eigentliche Reaktion als auch für die beschriebenen Aufarbeitungsschritte. Ebenso ist vorstellbar, dass nur einzelne Prozessschritte kontinuierlich durchgeführt werden, z.B. dass die Reaktion kontinuierlich, die Aufarbeitung aber batchweise erfolgt. Umgekehrt kann selbstverständlich auch die Reaktion batchweise, anschließende Aufarbeitungsschritte - insbesondere die destillative Entfernung der Leichtsieder - hingegen kontinuierlich erfolgen.

Das erfindungsgemäße Verfahren hat den Vorteil, dass das Carbamatosilan (CS) auch ohne weitere Aufreinigungsschritte in einer hohen Reinheit von vorzugsweise >95 % insbesondere >97 % erhalten wird.

Das erfindungsgemäße Verfahren hat den Vorteil, dass es sehr gute Raum-Zeit-Ausbeuten liefert und somit kostengünstig ist.

Das erfindungsgemäße Verfahren hat den Vorteil, dass es mit den angegebenen sehr niedrigen Katalysatorgehalten auskommt, was die Entfernung des neutralisierten, meist festen und salzförmigen Katalysators sehr einfach macht.

Das erfindungsgemäße Verfahren hat den Vorteil, dass es zu sehr hohen Umsatzraten und sehr niedrigen Restgehalten an nicht umgesetzten Aminosilan (AS) führt.

Das erfindungsgemäße Verfahren hat den Vorteil, sehr einfach und robust zu sein.

Das nach dem erfindungsgemäßen Verfahren hergestellte Carbamatosilan (CS) kann ohne weitere Aufreinigungsschritte in feuchtigkeitshärtenden Systemen, z.B. in silanvernetzenden Kleb- und Dichtstoffen, als Wasserfänger und/oder Haftvermittler eingesetzt werden.

Eine bevorzugte Verwendung der nach dem erfindungsgemäßen Verfahren hergestellten Carbamatosilans (CS) stellt eine Weiterverarbeitung zu entsprechenden Isocyanatosilanen dar. Diese erfolgt über eine thermische Spaltung der Carbamatgruppe zum jeweiligen Isocyanat und Methanol. Geeignete Verfahren sind u.a. in EP 2 097 426 beschrieben.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1

### Erfindungsgemäßes Verfahren zur Herstellung von N-(3-Trimethoxysilylpropyl)-O-methylcarbamat

In einem 1 l-Vierhalskolben mit Tropftrichter, Liebigkühler, KPG-Rührer und Thermometer wird eine Mischung aus 275,1 g (3,054 Mol) Dimethylcarbonat und 3,14 g einer 30 Gew.-%igen Lösung Natriummethanolat in Methanol (entspricht 0,94 g reines Natriummethanolat) vorgelegt und auf 55 °C erwärmt. Bei dieser Temperatur werden innerhalb von 30 min 456,3 g (2,545 mol) Aminopropyltrimethoxysilan zudosiert. Um die Temperatur zu halten, ist dabei eine leichte Kühlung erforderlich.

Anschließend wird für 1 h bei 55 °C nachgerührt und daraufhin auf 80 °C erwärmt. Bei dieser Temperatur wird für 2 weitere Stunden geführt.

Schließlich werden 1,15 g Essigsäure hinzugegeben. Ein aus der Reaktionsmischung entnommener Tropfen wird auf ein zuvor angefeuchtetes pH-Papier gegeben. Die Reaktionsmischung zeigt einen pH von 5 bis 6.

Aus der neutralisierten Reaktionsmischung werden die Leichtsieder destillativ entfernt. Dazu wird der Druck stufenweise auf bis zu ein mbar abgesenkt, während die Sumpftemperatur zunächst bei 80 °C verbleibt und zum Schluss noch einmal 110 °C erhöht wird. Die Destillation ist abgeschlossen, sobald kein Destillat mehr übertritt. Eine Analyse des Destillates mittels GC und/oder ¹H-NMR zeigt, dass das Destillat nahezu ausschließlich (d.h. zu mehr als 99 %) aus dem freigesetzten Methanol und dem im Überschuss eingesetzten Dimethylcarbonat besteht.

Es wird ein schwach gelbes Produkt in einer Reinheit von 98,4 % erhalten. Die Ausbeute ist bezogen auf das eingesetzte Aminosilan nahezu quantitativ (>99 %).

Während der Reaktionsführung werden sowohl am Ende der Nachrührzeit bei 55 °C, nach 1 h Nachrühren bei 80 °C und am Reaktionsende, d.h. nach 2 h Nachrühren bei 80 °C, kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

(Anmerkung: Nach der Zugabe der Essigsäure liegt das Aminosilan in teilweise protonierter Form vor)

### Beispiel 2

### Erfindungsgemäßes Verfahren zur Herstellung von N-(3-Trimethoxysilylpropyl)-O-methylcarbamat

Es wird so vorgegangen wie in Beispiel 1. Allerdings wird dieses Mal eine Mischung aus 456,3 g (2,545 mol) Aminopropyltrimethoxysilan und 3,14 g einer 30 Gew.-%igen Lösung Natriummethanolat in Methanol (entspricht 0,94 g reines Natriummethanolat) vorgelegt und auf 55 °C erwärmt. Bei dieser Temperatur werden innerhalb von 30 min 275,1 g (3,054 Mol) Dimethylcarbonat zudosiert. Um die Temperatur zu halten, ist dabei eine leichte Kühlung erforderlich.

Die weitere Versuchsdurchführung wird exakt genauso durchgeführt, wie bei Beispiel 1 beschrieben.

Es wird ein schwach gelbes Produkt in einer Reinheit von 98,6 % erhalten. Die Ausbeute ist bezogen auf das eingesetzte Aminosilan nahezu quantitativ (>99 %).

Erneut werden während der Reaktionsführung sowohl am Ende der Nachrührzeit bei 55 °C, nach 1 h Nachrühren bei 80 °C und am Reaktionsende, d.h. nach 2 h Nachrühren bei 80 °C, kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

### Beispiel 3

### Nicht erfindungsgemäßes Verfahren zur Herstellung von N-(3-Trimethoxysilylpropyl)-O-methylcarbamat

Es wird so vorgegangen wie in Beispiel 1. Allerdings wird dieses Mal von Anfang an eine Reaktionstemperatur von 80 °C eingestellt. D.h. das Aminopropyltrimethoxysilan wird bei dieser Temperatur dosiert, und anschließend wird für 3 Stunden bei dieser Temperatur nachgerührt.

Die weitere Versuchsdurchführung wird exakt genauso durchgeführt, wie bei Beispiel 1 beschrieben.

Es wird ein schwach gelbes Produkt erhalten, das noch erhebliche Mengen nicht umgesetztes Aminosilan enthält (s. Tabelle 1)

Auch bei diesem Versuch werden während der Reaktionsführung nach einer Nachrührzeit nach 1 h, 2 h und 3 Stunden (Reaktionsende) kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

### Beispiel 5 Nicht erfindungsgemäßes Verfahren zur Herstellung von N-(3-Trimethoxysilylpropyl)-O-methylcarbamat

Es wird so vorgegangen wie in Beispiel 1. Allerdings wird dieses Mal von Anfang an eine Reaktionstemperatur von 55 °C eingestellt. D.h. das Aminopropyltrimethoxysilan wird bei dieser Temperatur dosiert, und anschließend wird für 3 Stunden bei dieser Temperatur nachgerührt.

Die weitere Versuchsdurchführung wird exakt genauso durchgeführt, wie bei Beispiel 1 beschrieben.

Es wird ein schwach gelbes Produkt erhalten, das noch erhebliche Mengen nicht umgesetztes Aminosilan enthält (s. Tabelle 1)

Auch bei diesem Versuch werden während der Reaktionsführung nach einer Nachrührzeit nach 1 h, 2 h und 3 Stunden (Reaktionsende) kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

### Beispiel 6

### Nicht erfindungsgemäßes Verfahren zur Herstellung von N-(3-Trimethoxysilylpropyl)-O-methylcarbamat

Es wird so vorgegangen wie in Beispiel 1. Allerdings wird dieses Mal von Anfang an eine Reaktionstemperatur von 40 °C eingestellt. D.h. das Aminopropyltrimethoxysilan wird bei dieser Temperatur dosiert, und anschließend wird für 3 Stunden bei dieser Temperatur nachgerührt.

Die weitere Versuchsdurchführung wird exakt genauso durchgeführt, wie bei Beispiel 1 beschrieben.

Es wird ein schwach gelbes Produkt erhalten, das noch erhebliche Mengen nicht umgesetztes Aminosilan enthält (s. Tabelle 1)

Auch bei diesem Versuch werden während der Reaktionsführung nach einer Nachrührzeit nach 1 h, 2 h und 3 Stunden (Reaktionsende) kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

### Beispiel 7

### Nicht erfindungsgemäßes Verfahren zur Herstellung von N-(3-Trimethoxysilylpropyl)-O-methylcarbamat

Es wird so vorgegangen wie in Beispiel 2. Allerdings wird dieses Mal von Anfang an eine Reaktionstemperatur von 80 °C eingestellt. D.h. das Dimethylcarbonat wird bei dieser Temperatur dosiert, und anschließend wird für 3 Stunden bei dieser Temperatur nachgerührt.

Die weitere Versuchsdurchführung wird exakt genauso durchgeführt, wie bei Beispiel 1 beschrieben.

Es wird ein schwach gelbes Produkt erhalten, das noch erhebliche Mengen nicht umgesetztes Aminosilan enthält (s. Tabelle 1)

Auch bei diesem Versuch werden während der Reaktionsführung nach einer Nachrührzeit nach 1 h, 2 h und 3 Stunden (Reaktionsende) kleine Proben (<5 ml) entnommen, mit Essigsäure neutralisiert, wobei der pH-Wert mittels zuvor angefeuchtetem pH-Papier kontrolliert wird (s.o.), und mittels ¹H-NMR vermessen. Die dabei bestimmten Restgehalte nicht umgesetzten Aminosilans sind in Tabelle 1 aufgeführt.

### Auswertung

In Tabelle 1 sind die Gehalte an nicht umgesetztem 3-Aminopropyltrimethoxysilan nach der jeweiligen Nachrührzeit angegeben.

**Tabelle 1**

| | Nachrühr -zeit: 1h | Nachrühr -zeit: 2h | Nachrühr -zeit: 3h |
|---|---|---|---|
| Beispiel 1, Nachrührbedingungen: 1 h bei 55 °C, 2 h bei 80 ° | 15,2 % | 0,0 % | 0,0 % |
| Beispiel 2, Nachrührbedingungen: 1 h bei 55 °C, 2 h bei 80 ° | 5,6 % | 0,0 % | 0,0 % |
| Beispiel 3, Nachrührbedingungen: 3 h bei 80 °C * | 9,1 % | 8,3 % | 8,3 % |
| Beispiel 4, Nachrührbedingungen: 3 h unter Rückfluss * | 51,2 % | 45,9 % | 41,1 % |
| Beispiel 5, Nachrührbedingungen: 3 h bei 55 °C * | 14,6 % | 8,3 % | 4,8 % |
| Beispiel 6, Nachrührbedingungen: 3 h bei 40 °C * | 20,6 % | 14,5 % | 10,0 % |
| Beispiel 7, Nachrührbedingungen: 3 h bei 80 °C * | 5,2 % | 4,9 % | 4,8 % |

| | | | |
|---|---|---|---|
| *nicht erfindungsgemäß | | | |

### Beispiel 8

### Erfindungsgemäßes Verfahren zur Herstellung von N-(3-Triethoxysilylpropyl)-O-ethylcarbamat

In einem 2 l-Vierhalskolben mit Tropftrichter, Liebigkühler, KPG-Rührer und Thermometer wird eine Mischung aus 522,7 g (1,781 mol) Aminopropyltriethoxysilan und 2,80 g einer 30 Gew.-%igen Lösung Natriumethanolat in Ethanol (entspricht 0,83 g reines Natriumethanolat) vorgelegt und auf 55 °C erwärmt. Bei dieser Temperatur werden innerhalb von 30 min 252,6 g (2.138 Mol) Diethylcarbonat zudosiert. Um die Temperatur zu halten, ist dabei eine leichte Kühlung erforderlich.

Anschließend wird für 2 h bei 55 °C nachgerührt und daraufhin auf 80 °C erwärmt. Bei dieser Temperatur wird für 2 weitere Stunden geführt.

Schließlich werden 0,92 g Essigsäure hinzugegeben. Ein aus der Reaktionsmischung entnommener Tropfen wird auf ein zuvor angefeuchtetes pH-Papier gegeben. Die Reaktionsmischung zeigt einen pH von 5.

Aus der neutralisierten Reaktionsmischung werden die Leichtsieder destillativ entfernt. Dazu wird der Druck stufenweise auf bis zu ein mbar abgesenkt, während die Sumpftemperatur zunächst bei 80 °C verbleibt und zum Schluss noch einmal 130 °C erhöht wird. Die Destillation ist abgeschlossen, sobald kein Destillat mehr übertritt. Eine Analyse des Destillates mittels GC und/oder 1H-NMR zeigt, dass das Destillat nahezu ausschließlich (d.h. zu mehr als 99 %) aus dem während der Reaktion freigesetzten Ethanol und dem im Überschuss eingesetzten Diethylcarbonat besteht.

Es wird ein schwach gelbes Produkt in einer Reinheit von 97,9 % erhalten. Der Restgehalt des eingesetzten Aminopropyltriethoxysilans liegt bei 0,8 %. Die Ausbeute ist bezogen auf das eingesetzte Aminosilan sehr hoch (>97 %).

## Patentansprüche

1. Verfahren zur Herstellung von Carbamatoorganosilanen (CS) der allgemeinen Formel (3), 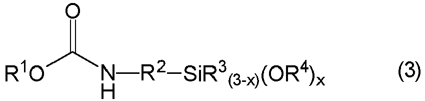
bei dem ein Aminoorganosilan (AS) der allgemeinen Formel (4),
NH₂-R²⁻SiR³₍₃₋ₓ₎(OR⁴)ₓ (4)
mit einem Dialkylcarbonat (DAC) der allgemeinen Formel (5), 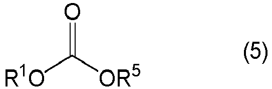
in Gegenwart eines basischen Katalysators (K) umgesetzt wird, wobei
R¹, R³, R⁴ und R⁵ gleich oder verschieden sein können und jeweils einen einwertigen, unsubstituierten oder substituierten Kohlenwasserstoffrest darstellen,
R² einen zweiwertigen, unsubstituierten oder substituierten Kohlenwasserstoffrest darstellt, und
x einen Wert 1, 2 oder 3 bedeutet, bei dem es während der Reaktion eine Periode (P1) gibt, in der die Reaktionstemperatur für die Dauer von mindestens 30 Minuten in einem Bereich von 45 bis 65 °C liegt, und es eine zeitlich später liegende Reaktionsperiode (P2) gibt, in der die Reaktionstemperatur zwischen 70 und 130 °C und mindestens 15 °C höher liegt als während der Periode (P1).

2. Verfahren nach Anspruch 1, bei dem der Rest R⁵ ein unsubstituierter einwertiger Kohlenwasserstoffrest mit 1 bis 6 Kohlenstoffatomen ist.

3. Verfahren nach einem der vorangehenden Ansprüche, bei dem der Rest R⁴ ein unsubstituierter Alkylrest mit 1 bis 4 Kohlenstoffatomenen ist.

4. Verfahren nach einem der vorangehenden Ansprüche, bei dem der Rest R² ein unsubstituierter Alkylenrest mit ein bis 6 Kohlenstoffatomen ist.

5. Verfahren nach einem der vorangehenden Ansprüche, bei dem die Temperatur während der Reaktionsperiode (P2) mindestens 20 °C höher als bei der früheren Periode (P1) liegt.

6. Verfahren nach einem der vorangehenden Ansprüche, bei dem die Aminosilane (AS) der allgemeinen Formel (4) und die Dialkylcarbonate (DAC) der allgemeinen Formel (5) in einem Verhältnis von 1,0:1,0 bis 1,0:2,0 eingesetzt werden.

7. Verfahren nach einem der vorangehenden Ansprüche, bei dem als Katalysator (K) Metallalkoholate eingesetzt werden.

8. Verfahren nach einem der vorangehenden Ansprüche, bei dem der Gehalt des Katalysators (K) bei höchstens 0,2 Gew.-%, bezogen auf das Gewicht der gesamten Reaktionsmischung liegt.

## Claims

1. Process for preparing carbamatoorganosilanes (CS) of the general formula (3), 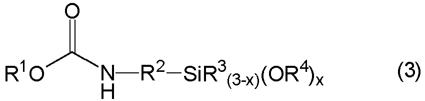
wherein an aminoorganosilane (AS) of the general formula (4),
NH₂-R²-SiR³₍₃₋ₓ₎(OR⁴)ₓ (4)
is reacted with a dialkyl carbonate (DAC) of the general formula (5), 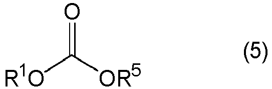
in the presence of a basic catalyst (K), where
R¹, R³, R⁴ and R⁵ can be identical or different and are each a monovalent, unsubstituted or substituted hydrocarbon radical,
R² is a divalent, unsubstituted or substituted hydrocarbon radical and
x is 1, 2 or 3, and during the reaction there is a period (P1) in which the reaction temperature is in a range from 45 to 65°C for a time of at least 30 minutes and there is a later reaction period (P2) in which the reaction temperature is between 70 and 130°C and at least 15°C higher than during the period (P1).

2. Process according to Claim 1, wherein the radical R⁵ is an unsubstituted monovalent hydrocarbon radical having from 1 to 6 carbon atoms.

3. Process according to either of the preceding claims, wherein the radical R⁴ is an unsubstituted alkyl radical having from 1 to 4 carbon atoms.

4. Process according to any of the preceding claims, wherein the radical R² is an unsubstituted alkylene radical having from 1 to 6 carbon atoms.

5. Process according to any of the preceding claims, wherein the temperature during the reaction period (P2) is at least 20°C higher than in the earlier period (P1).

6. Process according to any of the preceding claims, wherein the aminosilanes (AS) of the general formula (4) and the dialkyl carbonates (DAC) of the general formula (5) are used in a ratio of from 1.0:1.0 to 1.0:2.0.

7. Process according to any of the preceding claims, wherein metal alkoxides are used as catalyst (K).

8. Process according to any of the preceding claims, wherein the content of the catalyst (K) is not more than 0.2% by weight, based on the weight of the total reaction mixture.

## Revendications

1. Procédé pour la préparation de carbamatoorganosilanes (CS) de formule générale (3) 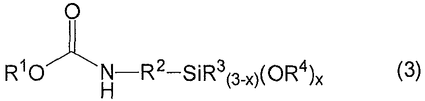
dans lequel un aminoorganosilane (AS) de formule générale (4),
NH₂-R²-SiR³₍₃₋ₓ₎(OR⁴)ₓ (4)
est transformé avec un carbonate de dialkyle (DAC) de formule générale (5), 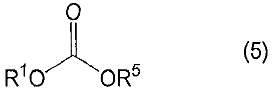
en présence d'un catalyseur basique (K),
R¹, R³, R⁴ et R⁵ pouvant être identiques ou différents et représentant à chaque fois un radical hydrocarboné monovalent, non substitué ou substitué,
R² représentant un radical hydrocarboné divalent, non substitué ou substitué, et
x signifiant un nombre 1, 2 ou 3,
dans lequel, il existe, pendant la réaction, une période (P1), au cours de laquelle la température de réaction se situe, pendant une durée d'au moins 30 minutes, dans une plage de 45 à 65 °C et il existe une période de réaction (P2) ultérieure dans le temps, au cours de laquelle la température de réaction se situe entre 70 et 130 °C et est supérieure d'au moins 15 °C à celle pendant la période (P1) .

2. Procédé selon la revendication 1, dans lequel le radical R⁵ représente un radical hydrocarboné non substitué monovalent comprenant 1 à 6 atomes de carbone.

3. Procédé selon l'une quelconque des revendications précédentes, dans lequel le radical R⁴ représente un radical alkyle non substitué comprenant 1 à 4 atomes de carbone.

4. Procédé selon l'une quelconque des revendications précédentes, dans lequel le radical R² représente un radical alkylène non substitué comprenant un à 6 atomes de carbone.

5. Procédé selon l'une quelconque des revendications précédentes, dans lequel la température pendant la période de réaction (P2) est supérieure d'au moins 20°C à celle pendant la période antérieure (P1).

6. Procédé selon l'une quelconque des revendications précédentes, dans lequel les aminosilanes (AS) de formule générale (4) et les carbonates de dialkyle (DAC) de formule générale (5) sont utilisés en un rapport de 1,0:1,0 à 1,0:2,0.

7. Procédé selon l'une quelconque des revendications précédentes, dans lequel on utilise, comme catalyseur (K), des alcoolates de métal.

8. Procédé selon l'une quelconque des revendications précédentes, dans lequel la teneur en catalyseur (K) est d'au plus 0,2 % en poids, par rapport au poids de la totalité du mélange réactionnel.
